# EUROPÄISCHE PATENTSCHRIFT

(11) **EP 0 550 877 B1**
(45) Veröffentlichungstag und Bekanntmachung des Hinweises auf die Patenterteilung: **29.11.1995**
(21) Anmeldenummer: 92121840.0
(22) Anmeldetag: 22.12.1992
(51) Int. Cl.: B23F 19/00, B23F 21/00

(54) **Verfahren zum Erzeugen von Hinterlegungen an geraden Innen- oder Aussenverzahnungen von verzahnten Werk-Stücken**
Method for generating undercuts in straight internal or external toothings of toothed workpieces
Procédé pour la génération des parties chanfreinées dans des dentures droites inférieures ou extérieures des pièces dentées

(30) Priorität: 10.01.1992 DE 4200418
(43) Veröffentlichungstag der Anmeldung: 14.07.1993
(73) Patentinhaber: PRÄWEMA WERKZEUGMASCHINENFABRIK GmbH, 37269 Eschwege (DE)
(72) Erfinder: Kulle, Walter, W-3440 Eschwege (DE)
(74) Vertreter: Sparing Röhl Henseler Patentanwälte

(56) Entgegenhaltungen:
- CH-A- 251 949
- DE-B- 2 603 826
- PATENT ABSTRACTS OF JAPAN vol. 010, no. 336 (M-535)(2392) 14. November 1986 & JP-A-61 142 015 (Toyota Motor Corp.) 28. Juni 1986 Zusammenfassung
- O. LUEGER (HRSG.) 'LEXIKON DER GESAMMTEN TECHNIK UND IHRER HILFSWISSENSCHAFTEN'1904 , DEUTSCHE VERLAGS-ANSTALT , STUTGART UND LEIPZIG SECHSTER BAND (ZWEITEVOLLST[NDIG NEU BEARBEITETE AUFLAGE)

## Beschreibung

Die Erfindung betrifft ein Verfahren zum Erzeugen von Hinterlegungen an geraden Innen- oder Außenverzahnungen von verzahnten Werkstücken sowie ein hierfür geeignetes Werkzeug.

Es ist bekannt, Hinterlegungen an mit einer geraden Innenverzahnung versehenen Schiebemuffen, wie sie beispielsweise in Kraftfahrzeuggetrieben verwendet werden, durch einen Walz- oder Rollvorgang zu erzeugen. Dies ist aber mit einem Materialwulst am Innenprofil verbunden, der eine Nachräumung und damit einen getrennten Arbeitsgang auf einer anderen Maschine erfordert.

Außerdem ist es aus der nicht vorveröffentlichten DE-C-4 122 460 bekannt, bei einer geraden Innenverzahnung Hinterlegungen dadurch zu erzeugen, daß die Innenverzahnung mit einem Schälrad, das einem gleichzeitigen Axial- und Radialvorschub bis zum Erreichen der geforderten Hinterlegungstiefe unterliegt, bearbeitet wird, wobei die Zähne des Schälrads in Richtung der Achse der Innenverzahnung verlaufen. Dies erfordert jedoch einen relativ großen maschinentechnischen Aufwand.

In der nicht vorveröffentlichten DE-C-4 117 365 ist ein Verfahren zum Einarbeiten sichelförmiger Taschen in Innenverzahnungen beschrieben, bei dem ein Einzahnfräswerkzeug relativ zur Verzahnung auf einer Epizykloide geführt wird, welches jeweils im Scheitelbereich der Epizykloide in Schneideingriff mit der Werkstückverzahnung gelangt.

Aufgabe der Erfindung ist es, ein Verfahren der eingangs genannten Art zu schaffen, mit dem Hinterlegungen ohne das Erfordernis einer zusätzlichen Nachbearbeitung in einem Arbeitsgang bei einfachem maschinentechnischen Aufwand herstellbar sind.

Diese Aufgabe wird dadurch gelöst, daß ein drehantreibbares Einzahnwerkzeug verwendet wird, dessen Schneidkante relativ zur Werkstückverzahnung für die Bearbeitung einer Innenverzahnung auf einer Hypozykloide und für die Bearbeitung an einer Außenverzahnung auf einer Epizykloide bewegt wird, so daß der Schneideneingriff in die Verzahnung jeweils im Spitzenbereich der Zykloide stoßend erfolgt, wobei die Zykloide derart gewählt wird, daß der jeweils in die zu bearbeitende Verzahnung eintauchende Zykloidenast sich wenigstens angenähert mit dem Eingriffswinkel der zu bearbeitenden Verzahnung deckt, und wobei die Schnittzustellung durch relatives Verdrehen von Werkzeug und Werkstück vorgenommen wird.

Die Erfindung betrifft ferner ein spanendes Werkzeug zum Erzeugen von Hinterlegungen an geraden Innen- bzw. Außenverzahnungen eines Werkstücks, bei dem eine Schneidplatte an einem Werkzeugkopf radial gegenüber diesem als Einzahn vorstehend angebracht ist, die ein Profil aufweist, das in Draufsicht eine sich in Axialrichtung erstreckende Schneidkante mit einer Form korrespondierend zur Form der Hinterlegung sowie gegebenenfalls eine hierzu spiegelsymmetrische Schneidkante aufweist, wobei der radiale Abstand zwischen der Achse des Werkzeugkopfes und der Schneidkante der Schneidplatte derart gewählt ist, daß die Schneidkante bei Abrollung der Schneidkante relativ zum Werkstück eine Hypo- bzw. Epizykloide derart beschreibt, daß der jeweils in die zu bearbeitende Verzahnung eintauchende Zykloidenast sich wenigstens angenähert mit dem Eingriffswinkel der zu bearbeitenden Verzahnung deckt.

Weitere Ausgestaltungen der Erfindung sind den Unteransprüchen zu entnehmen.

Die Erfindung wird nachstehend anhand der beigefügten Abbildungen näher erläutert.

Fig. 1 zeigt ausschnittweise eine Stirnansicht eines eine Innenverzahnung aufweisenden, als Werkrad vorgesehenen Kupplungsrings, dessen Zähne mit Hinterlegungen zu versehen sind.

Fig. 2 zeigt verkleinert einen Schnitt längs der Linie II-II von Fig. 1 mit fertigen Hinterlegungen.

Fig. 3 und 4 zeigen ausschnittweise in Seitenansicht und in Draufsicht ein Werkzeug zur Herstellung von Hinterlegungen.

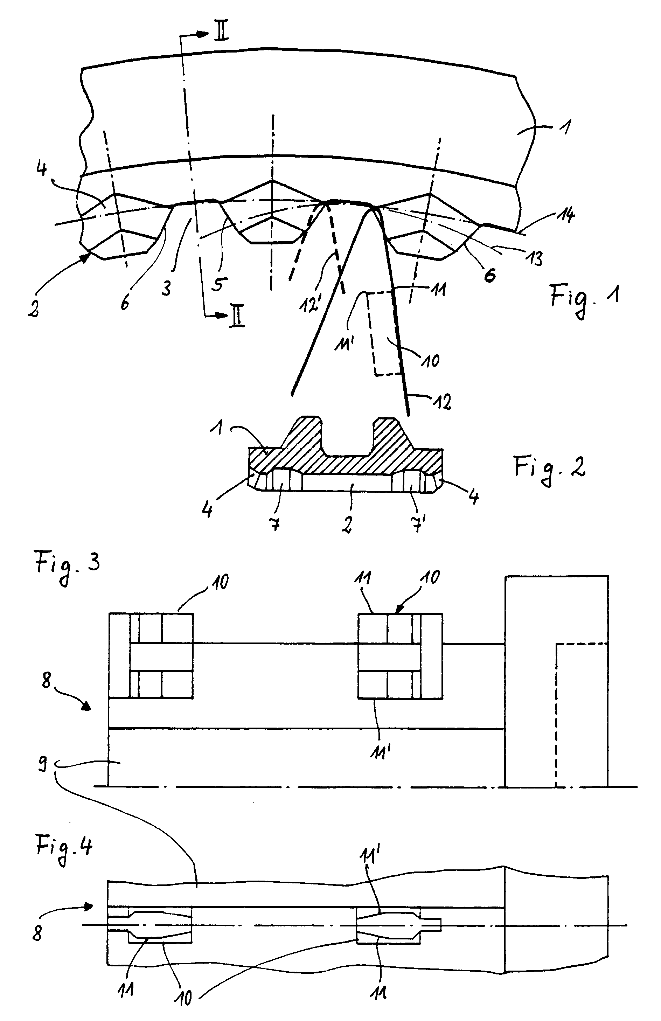

Das in den Fig. 1 und 2 dargestellte Werkstück 1 in Form eines Kupplungsrings besitzt eine Innenverzahnung mit entsprechend einer vorgesehenen Teilung angeordneten, geraden Zähnen 2, die durch Zahnlücken 3 voneinander getrennt sind. Stirnseitig sind die Zähne 2 bei diesem Ausführungsbeispiel mit einer dachförmigen Anspitzung 4 versehen. Außerdem sind die Zähne 2 des Kupplungsrings 1 an beiden Flanken 5, 6 sowie benachbart zu den an beiden Stirnseiten vorgesehenen Anspitzungen 4 mit Hinterlegungen 7, 7' zu versehen, die spiegelsymmetrisch zur mittleren Radialebene des Kupplungsrings 1 anzuordnen sind.

Die Hinterlegungen 7, 7' können dabei eine beliebige Form aufweisen, sie können wie im dargestellten Ausführungsbeispiel des Kupplungsrings 1 im Schnitt etwa trapezförmig sein, sie können aber auch im Schnitt gerundet und/oder beispielweise nach innen tiefer werdend gestaltet sein.

Zum Erzeugen der Hinterlegungen 7, 7' wird ein Werkzeug 8 verwendet, das einen Werkzeugkopf 9 besitzt, der zwei insbesondere als in Seitenansicht rechteckige Wendeschneidplatten ausgebildete Schneidplatten 10 trägt (die in nicht dargestellter Weise wendbar an dem Werkzeugkopf 9 befestigt sind). Die beiden Schneidplatten 10 sind entsprechend den damit herzustellenden spiegelsymmetrischen Hinterlegungen 7, 7' spiegelsymmetrisch am Umfang des Werkzeugkopfes 9 radial gegenüber diesem vorstehend in einer Axialebene des Werkzeugkopfes 9 angeordnet, so daß im vorliegenden Fall ein Doppel-Einzahnwerkzeug 8 gebildet wird. Die Schneidplatten 10 besitzen in Draufsicht eine sich in Axialrichtung erstreckende Schneidkante 11 mit einer Form korrespondierend zur Form der Hinterlegung 7 bzw. 7' sowie eine hierzu spiegelsymmetrische Schneidkante 11', so daß mit einem Werkzeug 8 sowohl die Hinterlegungen 7, 7' an den rechten, wie an den linken Flanken 5 bzw. 6 der Zähne 2 hergestellt werden können.

Die Hinterlegungen 7, 7' werden an den jeweiligen rechten Flanken 5 oder an den jeweiligen linken Flanken 6 der Zähne 2 angebracht, indem das Werkzeug 8 relativ zu dem mit der Innenverzahnung versehenen Werkstück 1 auf einer Hypozykloiden 12 bzw. 12' rotiert wird, wobei die Hypozykloide und damit der Radius des Rollkreises 13 des Werkzeugs 8 in bezug auf den Fußkreis 14 der Verzahnung des Werkstücks 1 derart gewählt ist, daß der jeweils in die zu bearbeitende Verzahnung eintauchende Zykloidenast sich wenigstens angenähert mit dem Eingriffswinkel der zu bearbeitenden Verzahnung deckt. Bei einer derartigen Relativbewegung zwischen Werkzeug 8 und Werkstück 1 wird das Werkzeug 8 in die zu bearbeitende Zahnflanke im Bereich des Umkehrpunktes der Hypozykloide 12 bzw. 12' hineingestoßen und nimmt auf diese Weise einen entsprechenden Span ab, so daß - gegebenenfalls nach entsprechender Schnittzustellung und mehrfacher spanender Bearbeitung - die gewünschte Hinterlegung 7, 7' entsteht.

Die Breite der in die Zahnlücken 3 eintauchenden Schneidplatten 10 ist derart zu wählen, daß die Bearbeitung und das Austauchen des Werkzeugs 8 derart vonstatten gehen, daß die gegenüberliegende nicht zu bearbeitende Zahnflanke nicht beeinträchtigt wird.

Die Hypozykloide kann im Bereich des Umkehrpunktes mehr oder weniger spitz sein, muß jedoch das freie Austauchen des Werkzeugs 8 zulassen. Eine gerundeter Bereich um den Umkehrpunkt ist günstig für ein Ablösen eines gebildeten Spans.

Das Verhältnis von Wälzwinkel des Werkzeugs 8 und Drehwinkel des Werkstücks 1 kann so gewählt werden, daß das Werkzeug 8 eine geschlossene Zykloide während eines Umlaufs des Werkstücks 1 durchläuft. Entsprechend der Zahl der Umkehrpunkte der Hypozykloide, beispielsweise drei oder vier, werden dann an einer entsprechenden Zahl von in einem entsprechenden Winkelabstand (beispielsweise 120° oder 90° bei drei bzw, vier Umkehrpunkten) beabstandeten Zähnen 2 Hinterlegungen 7, 7' erzeugt. Dann ist, nachdem die entsprechende Bearbeitungstiefe durch entsprechende Schnittzustellung zwischen Werkstück 1 und Werkzeug 8 erreicht ist, das Werkstück 1 um eine Teilung weiterzuschalten, um die nächste Zahl von beispielsweise drei oder vier Zähnen 2 zu bearbeiten, bis alle Zähne 2 bearbeitet sind.

Vorteilhafter ist jedoch eine Bearbeitung bei rotierendem Werkstück 1 und gleichsinnig hierzu rotierendem Werkzeug 8, wobei die Rotation von Werkstück 1 und Werkzeug 8 etwa über eine CNC-Steuerung synchronisiert und die Hypozykloide derart gewählt ist, daß sie erst nach der Bearbeitung aller Zähne 2 geschlossen ist. Die Hypozykloide kann derart gewählt werden, daß jeder Zahn 2 einmal während einer Schnittzustellung gestoßen wird. Bei einem Werkstück 1 mit 36 Zähnen 2 kann beispielsweise ein Drehwinkelverhältnis von 36/13 gewählt werden, so daß nach 13 Umläufen alle Zähne 2 mit dem Werkzeug 8 in Eingriff gelangt sind.

Beim Arbeiten mit rotierendem Werkstück 1 erfolgt, wenn eine mehrmalige Schnittzustellung notwendig ist, zunächst die Bearbeitung sämtlicher Zähne 2 bei der anfänglichen Schnittzustellung, die nach entsprechendem Umlauf des Werkzeugs 8 wiederholt wird.

Unabhängig davon ist es zweckmäßig, die Schnittzustellung durch entsprechendes Weiterdrehen des Werkstücks 1 um seine Achse vorzunehmen.

Die weiteren z.B. linken Flanken 6 der Zähne 2 werden in einem weiteren Arbeitgang bearbeitet, indem eine Schnittzustellung derart vorgenommen wird, daß das Werkzeug 8 mit diesen Flanken 6 in Eingriff gelangt, worauf die Drehrichtung des Werkzeugs 8 und des Werkstücks 1 umgekehrt wird.

Wenn die Hinterlegungen 7, 7' an z.B. den rechten oder linken Flanken 5 bzw. 6 erfolgt ist, kann eine Gratbeseitigung, falls notwendig, auch dadurch erfolgen, daß das Werkzeug 8 entsprechend axial verschoben und ein voller Umlauf, bei dem das Werkzeug 8 in alle Zahnlücken 3 eintaucht, durchgeführt wird.

Das Werkstück 1 kann in einer Halterung eingespannt und mit dieser über eine mit einem CNC-Antrieb versehene Werkstückspindel gedreht werden, während das Werkzeug 8 durch eine mit einem CNC-Antrieb versehene Werkzeugspindel, die parallel zur Achse der Werkstückspindel verläuft und über CNC-Antriebe in einer Richtung parallel zur Achse der Werkstückspindel und in einer Ebene quer zu ihrer Längsachse etwa mittels eines Schlittens etwa mittels eines Kreuzschlittens verschiebbar ist, um die Achse des Werkzeugkopfes 9 in Synchronisation zur Werkstückdrehung drehbar ist. Dies führt zu einem maschinentechnisch relativ geringen Aufwand.

Wenn die Hinterlegungen 7, 7' an außenverzahnten Werkstücken 1 angebracht werden sollen, kommt anstelle einer Hypozykloide eine Epizykloide infrage, wobei die Werkzeugdrehung und die relative Drehbewegung zwischen Werkzeugachse und Werkstückachse gegensinnig zueinander sind, ansonsten bleiben die Verhältnisse unverändert.

## Patentansprüche

1. Verfahren zum Erzeugen von Hinterlegungen (7, 7') an geraden Innen- oder Außenverzahnungen von verzahnten Werkstücken (1) mittels eines Werkzeugs, dadurch **gekennzeichnet**, daß ein drehantreibbares Einzahnwerkzeug (8) verwendet wird, dessen Schneidkante (11) relativ zur Werkstückverzahnung für die Bearbeitung einer Innenverzahnung auf einer Hypozykloide und für die Bearbeitung an einer Außenverzahnung auf einer Epizykloide bewegt wird, so daß der Schneideneingriff in die Verzahnung jeweils im Spitzenbereich der Zykloide stoßend erfolgt, wobei die Zykloide derart gewählt wird, daß der jeweils in die zu bearbeitende Verzahnung eintauchende Zykloidenast sich wenigstens angenähert mit dem Eingriffswinkel der zu bearbeitenden Verzahnung deckt, und wobei die Schnittzustellung durch relatives Verdrehen von Werkzeug und Werkstück (1) vorgenommen wird.

2. Verfahren nach Anspruch 1, dadurch gekennzeichnet, daß eine Werkstückdrehung bei der Bearbeitung einer Innenverzahnung gleichsinnig und bei der Bearbeitung einer Außenverzahnung gegensinnig und synchronisiert mit der eine sich nach mehreren Werkstückumläufen schliessenden Zykloide durchlaufenden Werkzeugdrehung vorgenommen wird.

3. Verfahren nach Anspruch 2, dadurch gekennzeichnet, daß das Drehzahlverhältnis von Einzahnwerkzeug (8) und Werkstück (1) so gewählt wird, daß jeder Werkstückzahn (2) einmal während einer Schnittzustellung bearbeitet wird.

4. Verfahren nach Anspruch 1, dadurch gekennzeichnet, daß das Einzahnwerkzeug (8) eine sich nach jedem Werkstückumlauf schließende Zykloide durchläuft und das gleichsinnig und synchronisiert mit dem Einzahnwerkzeug (8) sich drehende Werkstück (1) nach jedem vollen Zykloidendurchlauf des Einzahnwerkzeugs (8) um eine Teilung weitergeschaltet wird.

5. Verfahren nach einem der Ansprüche 1 bis 4, dadurch gekennzeichnet, daß die Schnittzustellung durch entsprechendes Weiterdrehen des Werkstücks (1) um seine Achse vorgenommen wird.

6. Verfahren nach einem der Ansprüche 1 bis 5, dadurch gekennzeichnet, daß ein Zykloide gewählt wird, deren in die zu bearbeitende Verzahnung eintauchender Zykloidenast im Bereich seines Umkehrpunktes gerundet ist.

7. Verfahren nach einem der Ansprüche 1 bis 6, dadurch gekennzeichnet, daß durch einen nachfolgenden Arbeitsgang mit radial verschobenem Einzahnwerkzeug (8) eine Gratbeseitigung vorgenommen wird.

8. Verfahren nach einem der Ansprüche 1 bis 7, dadurch gekennzeichnet, daß ein Einzahnwerkzeug (8) mit zwei zueinander spiegelsymmetrischen Schneidkanten (11, 11') verwendet wird, wobei nach Anbringung von Hinterlegungen (7, 7') an den Zahnflanken einer Seite mittels einer Schneidkante eine Schnittzustellung derart vorgenommen wird, daß die andere Schneidkante des Einzahnwerkzeugs (8) mit den Zahnflanken der anderen Seite in Eingriff gelangt, und die Drehrichtung des Einzahnwerkzeugs (8) und gegebenenfalls des Werkstücks (1) umgedreht wird.

9. Spanendes Werkzeug zum Erzeugen von Hinterlegungen (7, 7') an geraden Innen- bzw. Außenverzahnungen eines Werkstücks (1), dadurch **gekennzeichnet**, daß eine Schneidplatte (10) an einem Werkzeugkopf (9) radial gegenüber diesem als Einzahn vorstehend angebracht ist, die ein Profil aufweist, das in Draufsicht eine sich in Axialrichtung erstreckende Schneidkante (11) mit einer Form korrespondierend zur Form der Hinterlegung (7, 7') sowie gegebenenfalls eine hierzu spiegelsymmetrische Schneidkante (11') aufweist, wobei der radiale Abstand zwischen der Achse des Werkzeugkopfes (9) und der Schneidkante (11, 11') der Schneidplatte (10) derart gewählt ist, daß die Schneidkante (11, 11') bei Abrollung der Schneidkante (11, 11') relativ zum Werkstück (1) eine Hypo-bzw. Epizykloide (12, 12') derart beschreibt, daß der jeweils in die zu bearbeitende Verzahnung eintauchende Zykloidenast sich wenigstens angenähert mit dem Eingriffswinkel der zu bearbeitenden Verzahnung deckt.

10. Werkzeug nach Anspruch 9, dadurch gekennzeichnet, daß die Schneidplatte (10) als rechteckige Wendeschneidplatte ausgebildet ist.

## Claims

1. A method of producing backcuts (7, 7') in straight internal or external toothings of toothed workpieces (1) by means of a tool, characterised in that a single-toothed tool (8) is used which can be driven in rotating movement and the cutting edge (11) of which is moved relative to the workpiece toothing for the machining of an internal toothing on a hypocycloid and for the machining of an external toothing on an epicycloid so that the engagement of the cutting edge into the toothing takes place in an abutting manner respectively in the crest region of the cycloid, wherein the cycloid is chosen so that the cycloidal branch penetrating respectively into the toothing to be machined coincides at least approximately with the pressure angle of the toothing to be machined, and wherein the cutting advance is carried out by relative rotation of the tool and the workpiece (1).

2. A method according to Claim 1, characterised in that workpiece rotation during the machining of an internal toothing takes place in the same direction and during the machining of an external toothing it takes place in the opposite direction to and synchronised with the rotation of the tool traversing a cycloid concluding after several workpiece revolutions.

3. A method according to Claim 2, characterised in that the ratio of speed of rotation of the single-toothed tool (8) and the workpiece (1) is chosen so that each workpiece tooth (2) is machined once during one cutting advance.

4. A method according to Claim 1, characterised in that the single-toothed tool (8) traverses a cycloid concluding after each workpiece revolution and the workpiece (1) rotating in the same direction to and synchronised with the single-toothed tool (8) is advanced by one pitch after each complete cycloid passage.

5. A method according to any one of Claims 1 to 4, characterised in that the cutting advance is carried out by corresponding further rotation of the workpiece (1) about its axis.

6. A method according to any one of Claims 1 to 5, characterised in that a cycloid is chosen, of which the cycloidal branch penetrating into the toothing to be machined is rounded in the vicinity of its reversal point.

7. A method according to any one of Claims 1 to 6, characterised in that burrs are removed by a subsequent operation with a radially displaced single-toothed tool (8).

8. A method according to any one of Claims 1 to 7, characterised in that a single-toothed tool (8) with two mutually mirror-symmetrical cutting edges (11, 11') is used, wherein after the formation of backcuts (7, 7') in the tooth flanks of one side by means of a cutting edge a cutting advance is carried out so that the other cutting edge of the single-toothed tool (8) comes into engagement with the tooth flanks of the other side, and the direction of rotation of the single-toothed tool (8) and, optionally, of the workpiece (1) is reversed.

9. A cutting tool for producing backcuts (7,7') in straight internal or external toothings of a workpiece (1), characterised in that a cutting tip (10) is mounted on a tool head (9) projecting radially with respect thereto as a single tooth, which cutting tip has a profile which in plan view has a cutting edge (11) extending in axial direction, which is of a shape corresponding to the shape of the backcut (7, 7') and also which, optionally, has a cutting edge (11') mirror-symmetrical thereto, wherein the radial distance between the axis of the tool head (9) and the cutting edge (11, 11') of the cutting tip (10) is chosen so that with a rolling action of the cutting edge (11, 11') relative to the workpiece (1) the cutting edge (11, 11') describes a hypocycloid or epicycloid (12, 12') so that the cycloidal branch penetrating respectively into the toothing to be machined coincides at least approximately with the pressure angle of the toothing to be machined.

10. A tool according to Claim 9, characterised in that the cutting tip (10) is in the form of a rectangular disposable insert.

## Revendications

1. Procédé de réalisation de dépouilles (7, 7') sur des dentures droites intérieures ou extérieures de pièces dentées à usiner (1) au moyen d'un outil d'usinage, caractérisé en ce qu'on utilise un outil d'usinage à dent unique (8) pouvant être mis en rotation, dont l'arête de coupe (11) est, pour l'usinage d'une denture intérieure, déplacée relativement à la denture de la pièce à usiner sur une hypocycloïde et, pour l'usinage d'une denture extérieure, déplacée relativement à la denture de ladite pièce sur une épicycloïde, de sorte que l'attaque de l'outil dans la denture se produit de manière successive dans la zone pointue de la cycloïde, la cycloïde étant choisie de telle sorte que le point de rebroussement de la cycloïde qui s'enfonce chaque fois dans la denture à usiner coïncide au moins de manière approchée avec l'angle d'attaque de la denture à usiner, et l'avance de coupe est effectuée par des mouvements de rotation relatifs de l'outil d'usinage et de la pièce à usiner (1).

2. Procédé selon la revendication 1, caractérisé en ce qu'une rotation de la pièce à usiner est effectuée dans le même sens pour l'usinage d'une denture intérieure et dans le sens contraire pour l'usinage d'une denture extérieure, et de manière synchronisée avec la rotation de l'outil d'usinage décrivant une cycloïde se refermant sur elle-même après plusieurs tours de la pièce.

3. Procédé selon la revendication 2, caractérisé en ce que le régime de rotation de l'outil d'usinage à dent unique (8) et de la pièce à usiner (1) est choisi de telle sorte que chaque dent de la pièce à usiner (2) soit usinée une fois pendant une avance de coupe.

4. Procédé selon la revendication 1, caractérisé en ce que l'outil d'usinage à dent unique (8) décrit une cycloïde se refermant après chaque tour de la pièce à usiner et la pièce à usiner (1), tournant dans le même sens et de manière synchronisée avec l'outil à dent unique (8), est déplacéee d'un pas après chaque trajectoire cycloïdale complète de l'outil à dent unique (8).

5. Procédé selon l'une des revendications 1 à 4, caractérisé en ce que l'avance de coupe est effectuée par d'autres mouvements rotatifs appropriés de la pièce à usiner (1) autour de son axe.

6. Procédé selon l'une des revendications 1 à 5, caractérisé en ce qu'on choisit une cycloïde dont la partie pointue s'enfonçant dans la denture à usiner est arrondie au voisinage du point de rebroussement.

7. Procédé selon l'une des revendications 1 à 6, caractérisé en ce qu'un ébavurage est effectué par un passage ultérieur avec un mouvement radial de l'outil d'usinage à dent unique (8).

8. Procédé selon l'une des revendications 1 à 7, caractérisé en ce qu'on utilise un outil d'usinage à dent unique (8) comportant deux arêtes de coupe (11, 11') symétriques l'une de l'autre, avec lequel, après avoir réalisé des dépouilles (7, 7') sur les flancs d' une dent, d'un côté, au moyen de l'une des arêtes de coupe, une avance de coupe est effectuée de telle sorte que l'autre arête de coupe de l'outil d'usinage à dent unique (8) soit appliquée sur les flancs de la dent, de l'autre côté, et le sens de rotation de l'outil d'usinage à dent unique (8), et éventuellement de la pièce à usiner (1), est inversé.

9. Outil d'usinage par enlèvement de copeaux destiné à réaliser des dépouilles (7, 7') sur des dentures intérieures ou extérieures d'une pièce à usiner (1), caractérisé en ce qu'une plaque de coupe (10) est agencée en saillie comme une dent sur une tête d'outil (9) radialement par rapport à celle-ci, laquelle plaque a un profil qui, vu de dessus, présente une arête de coupe (11) s'étendant axialement avec une forme correspondant à celle des dépouilles (7, 7') ainsi qu'éventuellement une arête de coupe (11') symétrique de celle-ci, la distance radiale entre l'axe de la tête d'outil (9) et l'arête de coupe (11, 11') de la plaque de coupe (10) étant choisie de telle sorte que l'arête de coupe (11, 11'), lors du mouvement de l'arête de coupe (11, 11') relativement à la pièce à usiner (1), décrive une hypocycloïde ou une épicycloïde (12, 12') de telle sorte que le point de rebroussement de la partie de cycloïde s'enfonçant dans la denture à usiner coïncide au moins de façon approchée avec l'angle d'attaque de la denture à usiner.

10. Outil d'usinage selon la revendication 9, caractérisé en ce que la plaque de coupe (10) est réalisée sous forme d'une plaque amovible rectangulaire.
